# EUROPEAN PATENT SPECIFICATION

(11) **EP 4 109 976 B1**
(45) Date of publication and mention of the grant of the patent: **28.10.2026**
(21) Application number: 21780838.5
(22) Date of filing: 10.03.2021
(51) Int. Cl.: H04W 48/08, H04W 48/16, H04J 14/00

(54) **NETWORK ACCESS METHODS, A DEVICE AND A CHIP.**
NETZWERKZUGANGSVERFAHREN, EIN GERÄT UND EIN CHIP
PROCÉDÉS D'ACCÈS À UN RÉSEAU, UN DISPOSITIF ET UNE PUCE

(30) Priority: 01.04.2020 CN 202010252462
(43) Date of publication of application: 28.12.2022
(73) Proprietor: Huawei Technologies Co., Ltd., Shenzhen, Guangdong 518129, (CN)
(72) Inventor: LV, Yi, Shenzhen, Guangdong 518129 (CN); NI, Rui, Shenzhen, Guangdong 518129 (CN); ZHU, Qian, Shenzhen, Guangdong 518129 (CN)
(74) Representative: Gill Jennings & Every LLP
(86) International application number: PCT/CN2021/079997
(87) International publication number: WO 2021/197006

(56) References cited:
- EP-A1- 3 509 384
- CN-A- 103 312 658
- CN-A- 107 888 321
- CN-A- 107 889 244
- US-A1- 2019 334 609
- US-A1- 2020 007 235
- WANG WEI ET AL: "Performance Investigation of OAMSK Modulated Wireless Optical System Over Turbulent Ocean Using Convolutional Neural Networks", JOURNAL OF LIGHTWAVE TECHNOLOGY, IEEE, USA, vol. 38, no. 7, 9 December 2019 (2019-12-09), pages 1753 - 1765, XP011782183, ISSN: 0733-8724, [retrieved on 20200406], DOI: 10.1109/JLT.2019.2958413
- WENCHI CHENG ET AL: "Orbital Angular Momentum for Wireless Communications", ARXIV.ORG, CORNELL UNIVERSITY LIBRARY, 201 OLIN LIBRARY CORNELL UNIVERSITY ITHACA, NY 14853, 20 April 2018 (2018-04-20), XP080872671
- VAVILOVA VIKTORIIA: "The Possibility of Using the Orbital Angular Momentum in Radio Communication Systems", 2019 INTERNATIONAL CONFERENCE ON ELECTROTECHNICAL COMPLEXES AND SYSTEMS (ICOECS), IEEE, 21 October 2019 (2019-10-21), pages 1 - 4, XP033684197, DOI: 10.1109/ICOECS46375.2019.8949992

## Description

### TECHNICAL FIELD

This application relates to the field of communications technologies, and in particular, to network access methods, a device and a chip.

### BACKGROUND

In a conventional technology, a communications apparatus receives a time-frequency resource sent by a network side, and accesses the network side device based on the time-frequency resource. Specifically, a manner in which a plurality of communications apparatuses contend for the time-frequency resource is used. If a communications apparatus succeeds in contention, the communications apparatus may access the network side device, and if a communications apparatus fails in contention, the communications apparatus performs next round of contention.

However, in a process of implementing the conventional technology, the inventors have found at least the following problem: As types and quantities of communications apparatuses continuously increase, a success rate of accessing the network side device by the communications apparatus is low.

Relevant prior art is
- US 2019/334609 A1 (ALAVI HOSSEIN [US] ET AL) 31 October 2019 (2019-10-31)
- WANG WEI ET AL: "Performance Investigation of OAMSK Modulated Wireless Optical System Over Turbulent Ocean Using Convolutional Neural Networks",JOURNAL OF LIGHTWAVE TECHNOLOGY, IEEE, USA, vol. 38, no. 7, 9 December 2019 (2019-12-09), pages 1753-1765, XP011782183,ISSN: 0733-8724, DOI: 10.1109/ JLT.2019.2958413

### SUMMARY

To resolve the foregoing technical problem, embodiments of this application provide network access methods, a device and a chip

The invention is defined by the appended independent claims and further embodiments are described by the dependent claims.

### BRIEF DESCRIPTION OF DRAWINGS

FIG. 1 is a schematic diagram of a scenario according to an embodiment of this application;
FIG. 2 is a schematic diagram of a scenario according to another embodiment of this application;
FIG. 3 is a schematic diagram of a network access method according to an embodiment of this application;
FIG. 4 is a schematic diagram of a network access method according to another embodiment of this application;
FIG. 5 is a schematic diagram of a network access method according to still another embodiment of this application;
FIG. 6 is a schematic diagram of a communications apparatus according to an embodiment of this application;
FIG. 7 is a schematic diagram of a network side device according to an embodiment of this application;
FIG. 8 is a schematic diagram of a chip according to an embodiment of this application; and
FIG. 9 is a schematic diagram of an electronic device according to an embodiment of this application.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are only examples of apparatuses and methods that are described in the appended claims in detail and that are consistent with some aspects of this application.

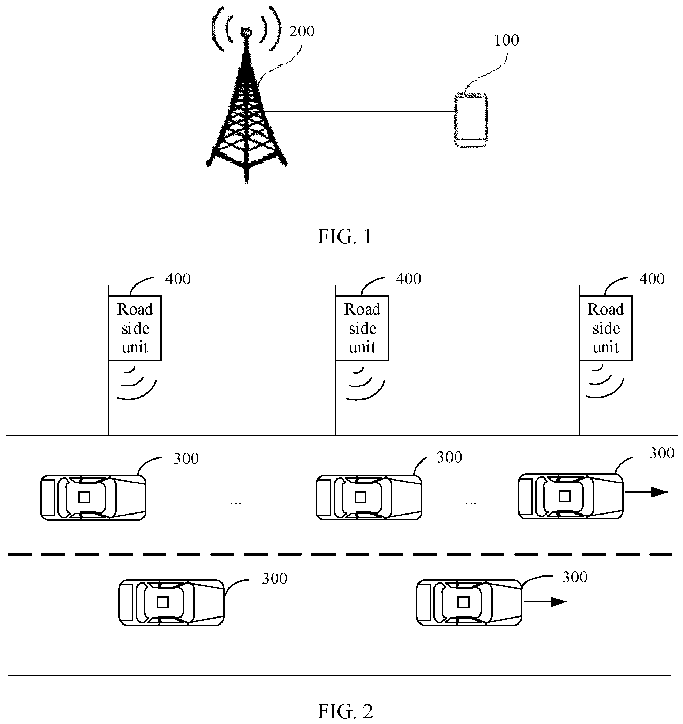

In some embodiments, a network access method in this embodiment of this application may be applied to an application scenario shown in FIG. 1.

In the application scenario shown in FIG. 1, a communications apparatus may be a mobile phone 100, and a network side device may be a base station 200.

A communication link may be established between the mobile phone 100 and the base station 200, and the mobile phone 100 may transmit data with the base station 200 based on the established communication link.

It should be noted that the application scenario shown in FIG. 1 may be applied to different network standards, for example, may be applied to global mobile communications (Global System of Mobile communication, GSM for short), code division multiple access (Code Division Multiple Access, CDMA for short), wideband code division multiple access (Wideband Code Division Multiple Access, WCDMA for short), time division-synchronous code division multiple access (Time Division-Synchronous Code Division Multiple Access, TD-SCDMA for short), a long term evolution (Long Term Evolution, LTE for short) system, a Bluetooth system, a Wi-Fi system, a 5G system, or a future network standard. Optionally, the communications system may be a system in an ultra-reliable and low latency communications (Ultra-Reliable and Low Latency Communications, URLLC) transmission scenario in a 5G communications system.

Therefore, optionally, the base station may be a base transceiver station (Base Transceiver Station, BTS for short) and/or a base station controller in the GSM or the CDMA, a NodeB (NodeB, NB for short) and/or a radio network controller (Radio Network Controller, RNC for short) in the WCDMA, an evolved NodeB (Evolved NodeB, eNB or eNodeB for short) in the LTE, a relay station or an access point, a gNB (gNB) in a 5G network, a satellite, a network device that undertakes a base station function in device-to-device (Device-to-Device, D2D) communication, vehicle-to-everything (Vehicle-to-X, V2X) communication, machine-to-machine (Machine-to-Machine, M2M) communication, and various possible future communications, or the like. This is not limited in the present invention.

The communications apparatus may be a wireless terminal or a wired terminal. The wireless terminal may be a device that provides a user with voice and/or other service data connectivity, a handheld device with a wireless connection function, or another processing device connected to a wireless modem. The wireless terminal may communicate with one or more core network devices through a radio access network (Radio Access Network, RAN for short). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For another example, the wireless terminal may alternatively be a device such as a personal communications service (Personal Communications Service, PCS for short) phone, a cordless phone, a session initiation protocol (Session Initiation Protocol, SIP for short) phone, a wireless local loop (Wireless Local Loop, WLL for short) station, or a personal digital assistant (Personal Digital Assistant, PDA for short). The wireless terminal may also be referred to as a system, a subscriber unit (Subscriber Unit), a subscriber station (Subscriber Station), a mobile station (Mobile Station), a mobile (Mobile), a remote station (Remote Station), a remote terminal (Remote Terminal), an access terminal (Access Terminal), a user terminal (User Terminal), a user agent (User Agent), and a user device (User Device or User Equipment). This is not limited herein.

It should be noted that FIG. 1 merely describes an example that the communications apparatus may include a mobile phone, and the network side device may include a base station, but cannot be understood as a limitation on the communications apparatus and the base station.

For example, the communications apparatus may further include a smartwatch, a tablet computer, smart glasses, a smartwatch, or a communications apparatus that has a wireless communication function in the internet of things and that has a fixed location within a period of time, for example, a device such as a smart home device in the internet of things or a road side facility (street lamp). The network side device may also be a device such as a router or a bridge.

In some other embodiments, a network access method in this embodiment of this application may be further applied to an application scenario shown in FIG. 2.

In the application scenario shown in FIG. 2, a communications apparatus may be an in-vehicle terminal (not shown in the figure) disposed in a vehicle 300, and a network side device may be a road side unit (Road Side Unit, RSU) 400 disposed on at least one side of a road.

A communication link may be established between the in-vehicle terminal and the RSU, and the in-vehicle terminal may transmit data with the RSU based on the communication link.

In a related technology, to access the network side device, the communications apparatus needs to select, from channel resources sent by the network side device, a resource for accessing the network side device. For example, the channel resources include resources in at least two dimensions. A resource in one dimension is a time domain resource, and a resource in the other dimension is a frequency domain resource. In some systems, resources in dimensions such as a code domain dimension, a polarization dimension, and an antenna (space) dimension may be further increased.

However, as types and quantities of communications apparatuses continuously increase, available channel resources are reduced, and a probability that each communications apparatus successfully accesses the network side device is reduced.

After creative efforts, the inventors of this application have obtained the inventive concept of the embodiments of this application: increasing the available channel resources.

By using specific embodiments, the following describes in detail the technical solutions of this application and how to resolve the foregoing technical problem by using the technical solutions of this application. The following several specific embodiments may be combined with each other, and a same or similar concept or process may not be described repeatedly in some embodiments. The following describes the embodiments of this application with reference to accompanying drawings.

According to an aspect of the embodiments of this application, an embodiment of this application provides a network access method.

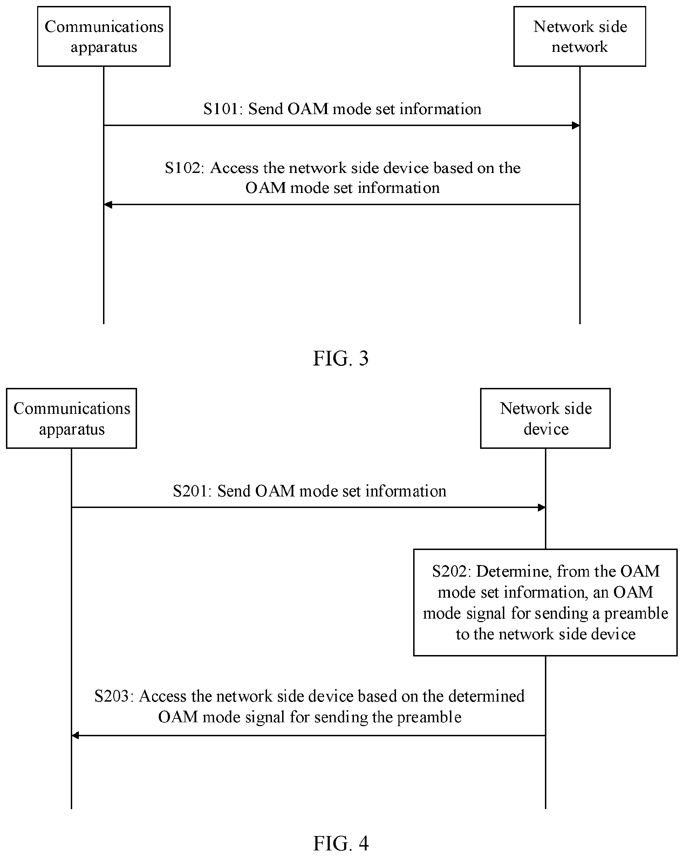

FIG. 3 is a schematic diagram of a network access method according to an embodiment of this application.

As shown in FIG. 3, the method includes the following steps.

S101: A network side device sends OAM mode set information to a communications apparatus.

The OAM mode set information may be generated by using an antenna array disposed in the network side device, and the network side device sends the OAM mode set information to the communications apparatus. The network side device may notify all communications apparatuses within a coverage area of the network side device of the OAM mode set information supported by the network side device in a broadcast manner. Alternatively, the network side device may separately notify all communications apparatuses within a coverage area of the network side device of the OAM mode set information supported by the network side device in a unicast manner such as RRC (Radio Resource Control, radio resource control) signaling or DCI (Downlink Control Indicator, downlink control indicator) signaling. The unicast manner is suitable for notifying the network side device of OAM mode set information of a target cell or a target beam before cell handover or beam handover. Because principles and methods of the broadcast and the unicast are similar, they are not distinguished in the following description.

The OAM mode set information represents related information about a resource including an OAM mode signal, the OAM mode signal represents a topological charge included in an OAM electromagnetic wave, and OAM mode signals having different topological charges are orthogonal to each other, that is, different OAM mode signals are orthogonal to each other.

The antenna array may also be in a circular, linear, or another array form, and a quantity of OAM mode signals is related to a quantity of elements in the antenna array.

For example, if a quantity of elements is N, a quantity *l* of OAM mode signals is: $- \frac{N}{2} \leq l \leq \frac{N}{2}$*,* and a maximum value of the OAM mode signal may be determined based on a maximum coverage area of the network side device. For example, an average bit error rate BERₐᵥₑ under a maximum coverage radius of the network side device is less than or equal to a maximum acceptable threshold T_{BER} of the network side device, that is, BERₐᵥₑ ≤ T_{BER}.

The average bit error rate BERₐᵥₑ represents a percentage of an erroneous data volume in a total data volume during data transmission. For specific calculation, refer to the convention technology. Details are not described herein again. The threshold T_{BER} may be set based on a requirement, empirical data, and an experiment.

In other words, in this embodiment of this application, a resource in one dimension is added to channel resources sent by the network side device to the communications apparatus. Specifically, based on the channel resources in the related technology, a resource of the OAM mode signal is added, and may be referred to as a modal domain resource.

S102: The communications apparatus accesses the network side device based on the OAM mode set information.

After receiving the OAM mode set information sent by the network side device, the communications apparatus may learn related information about a resource of a corresponding OAM mode signal, and may access the network side device based on the OAM mode set information. It should be noted that the accessing the network side device herein also includes initiating access to a neighboring cell or a neighboring beam. Because principles and methods are consistent, they are not distinguished in the following description.

For example, because the OAM mode set information includes related information about resources of available OAM mode signals, the communications apparatus may select any OAM mode signal from the available OAM mode signals, and access the network side device based on the selected OAM mode signal.

It should be noted that, in this embodiment of this application, a resource in one dimension is added to channel resources sent by the network side device to the communications apparatus. Therefore, an available resource can be increased, thereby improving a success rate of accessing the network side device by the communications apparatus. In addition, because OAM mode signals having different topological charges are orthogonal to each other, mutual interference between the OAM mode signals during data transmission can be reduced, thereby improving technical effects of transmission reliability and security.

In some embodiments, the OAM mode set information includes at least one OAM mode signal sent by the network side device.

In other words, the network side device may send one OAM mode signal or a plurality of OAM mode signals to the communications apparatus. To be specific, in this embodiment of this application, the network side device may send one or more OAM mode signals to the communications apparatus while sending the related information about the resources of the available OAM mode signals to the communications apparatus.

For example, the network side device sends OAM mode set information to the communications apparatus, where the OAM mode set information includes an available OAM mode signal, and further includes one or more OAM mode signals. The communications apparatus may access the network side device based on the available OAM mode signal, or may access the network side device based on the one or more OAM mode signals.

In the current invention, the OAM mode set information includes OAM mode signals sent by the network side device, and the OAM mode signals are simultaneously or sequentially sent by the network side device.

In other words, the network side device may simultaneously send all available OAM mode signals to the communications apparatus, and the communications apparatus may access the network side device based on all the OAM mode signals.

In some other embodiments, the OAM mode set information includes OAM mode signals that are sequentially sent by the network side device in a sending period.

It should be noted that the network side device may periodically send the OAM mode set information to the communications apparatus, where the period represents a frequency at which the network side sends the OAM mode set information. For example, the network side device sends the OAM mode set information to the communications apparatus at an interval of a preset time.

In other words, in this embodiment of this application, the network side device may sequentially send the plurality of OAM mode signals to the communications apparatus at different moments in a sending period.

For example, if there are *l* available OAM mode signals, and duration of the sending period is t, if a time for sending a first OAM mode signal is t1, a time for sending a second OAM mode signal is t1 + (t/*l*). The rest may be deduced by analogy.

It should be noted that the foregoing example merely describes an example in which the OAM mode signal may be periodically sent at an equal time interval in this embodiment of this application, and cannot be understood as a limitation on the scope of this embodiment of this application. For example, in this embodiment of this application, the OAM mode signal may also be periodically sent at a random time interval (that is, time intervals may be unequal).

A sending sequence of the OAM mode signals is not limited in this embodiment of this application. For example, a sending sequence of the OAM mode signals may be randomly determined, or may be set based on a requirement or the like.

In the current invention, the OAM mode signals are determined by the network side device based on divergence performance corresponding to the OAM mode signals.

The divergence performance represents divergence of the OAM mode signal. Smaller divergence of an OAM mode signal indicates stronger divergence performance of the OAM mode signal, and generally stronger divergence performance of an OAM mode signal indicates higher corresponding data transmission reliability.

Specifically, the network side device may send the OAM mode signals in descending order of the divergence performance.

In this embodiment of this application, if the network side device sends the OAM mode signals to the communications apparatus in descending order of the divergence performance, an OAM mode signal first received by the communications apparatus is an OAM mode signal with highest divergence performance. Because reliability of data transmission of the OAM mode signal with highest divergence performance is high, the communications apparatus may select the first OAM mode signal to access the network side device. This can save an access time of the communications apparatus.

In some other embodiments, the OAM mode set information includes any OAM mode signal sent by the network side device, and the any mode signal is different in adjacent sending periods of the network side device.

In other words, in this embodiment of this application, the network side device may send, to the communications apparatus in each sending period, related information about a resource including an available OAM mode signal, and may send one OAM mode signal. The OAM mode signal sent by the network side device is different in two adjacent sending periods.

For example, in an n^{th} sending period, the network side device sends related information about a resource of an available OAM mode signal to the communications apparatus, and sends a first OAM mode signal. In an (n + 1)^{th} sending period, the network side device sends related information about a resource of an available OAM mode signal to the communications apparatus, and sends a second OAM mode signal. In an (n + 2)^{th} sending period, the network side device sends related information about a resource of an available OAM mode signal to the communications apparatus, and sends a third OAM mode signal. The rest may be deduced by analogy. If the network side device has sent all OAM mode signals in a sending period, the network side device may restart sending, that is, restart sending from the first OAM mode signal.

Similarly, a sending sequence of the OAM mode signals corresponding to a plurality of sending periods is not limited in this embodiment of this application. For example, a plurality of sending periods and a sending sequence of the OAM mode signals may be randomly determined, or a plurality of sending periods and a sending sequence of the OAM mode signals may be set based on a requirement or the like. In some embodiments, a sending sequence of OAM mode signals corresponding to a plurality of sending periods may be determined by the network side device based on divergence performance corresponding to the OAM mode signals.

To make readers more deeply understand how the communications apparatus accesses the network side device, the network access method in this embodiment of this application is described in detail with reference to FIG. 4. FIG. 4 is a schematic diagram of a network access method according to another embodiment of this application.

As shown in FIG. 4, the method includes the following steps.

S201: A network side device sends OAM mode set information to a communications apparatus.

For description of S201, refer to the foregoing example. Details are not described herein again.

S202: The communications apparatus determines, from the OAM mode set information, an OAM mode signal for sending a preamble to the network side device.

S203: The communications apparatus accesses the network side device based on the determined OAM mode signal for sending the preamble.

The communications apparatus may randomly select, based on the OAM mode set information, the OAM mode signal for sending the preamble to the network side device. Alternatively, the communications apparatus may select, based on receiving performance for receiving each OAM mode signal in the OAM mode set information, the OAM mode signal for sending the preamble to the network side device. Alternatively, the communications apparatus may send, based on an OAM mode signal specified in downlink control information (downlink control information, DCI) sent by the network side, the preamble to the network side device.

The receiving performance includes signal strength for receiving, by the communications apparatus, the OAM mode signal in the OAM mode set information.

It should be noted that, in some embodiments, the communications apparatus may be in a moving state, and when the communications apparatus moves, the network side device that may be accessed may also change.

For example, a network side device originally accessed by the communications apparatus is a base station corresponding to a cell A. Because the communications apparatus moves to a cell B, the network side device accessed by the communications apparatus may be switched from the base station corresponding to the cell A to a base station corresponding to a cell B.

Alternatively, the communications apparatus may be located at a location covered by a plurality of cells.

For example, a location of the communications apparatus may be covered by a base station corresponding to a cell A, or may be covered by a base station corresponding to a cell B.

Due to reasons such as weather and a base station device, at some moments, when the communications apparatus accesses the base station corresponding to the cell A, network performance may be stronger than that when the communications apparatus accesses the base station corresponding to the cell B. At other moments, when the communications apparatus accesses the base station corresponding to the cell B, network performance may be stronger than that when the communications apparatus accesses the base station corresponding to the cell A.

To ensure network performance of the communications apparatus, in this embodiment of this application, the OAM mode set information may be determined and sent by a to-be-switched network side device based on attribute information that is of the communications apparatus and that is sent by the network side device.

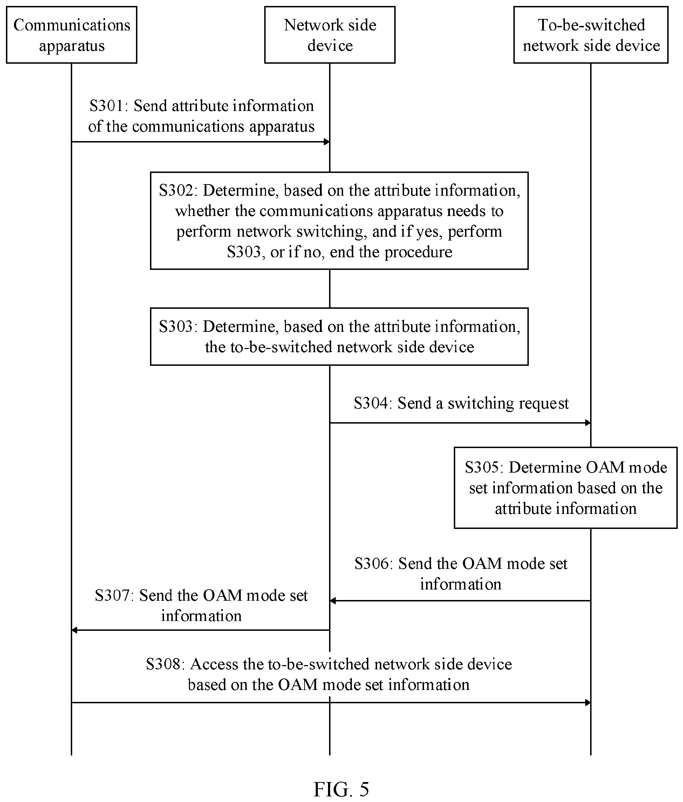

This embodiment of this application is now described in detail with reference to FIG. 5. FIG. 5 is a schematic diagram of a network access method according to still another embodiment of this application.

As shown in FIG. 5, the method includes the following steps.

S301: A communications apparatus sends attribute information of the communications apparatus to a network side device.

The attribute information may represent information in two dimensions of the communications apparatus. Information in one dimension is information related to network performance, for example, a signal receiving rate. Information in the other dimension is information related to a device parameter of the communications apparatus, for example, location information of the communications apparatus.

S302: The network side device determines, based on the attribute information, whether the communications apparatus needs to perform network switching, and if yes, performs S303, or if no, ends the procedure.

For example, if the signal receiving rate in the attribute information indicates that the signal receiving rate of the communications apparatus is very low, resulting in poor network performance, a determining result of the network side device may be that the communications apparatus needs to perform network switching.

Specifically, a rate threshold may be set based on a requirement, empirical data, an experiment, and the like. The network side device compares the signal receiving rate with the rate threshold. If the signal receiving rate is greater than the rate threshold, a determining result is that no switching is performed, and the procedure ends. If the signal receiving rate is less than or equal to the threshold, the determining result is that switching is performed. Certainly, in some other embodiments, if the signal receiving rate is equal to the rate threshold, a determining result may also be that switching is performed.

For another example, if the network side device determines, based on the attribute information, that location information of the communications apparatus is already located at an edge of signal coverage of the network side device, a determining result of the network side device may be that the communications apparatus needs to perform network switching.

Specifically, a coverage area may be set based on a requirement, empirical data, an experiment, and the like. The network side device determines whether the location information of the communications apparatus is within the coverage area. If yes, a determining result is that no switching is performed, and the procedure ends. If the location information is not within the coverage area, a determining result is that switching is performed.

S303: The network side device determines, based on the attribute information, a to-be-switched network side device.

The to-be-switched network side device represents a network side device that meets a network performance requirement of the communications apparatus.

Based on the foregoing example, the to-be-switched network side device is a network side device that meets that the signal receiving rate of the communications apparatus is greater than the rate threshold; or the to-be-switched network side device is a network side device that meets that the location information of the communications apparatus is within the coverage area of the communications apparatus.

S304: The network side device sends a switching request to the to-be-switched network side device, where the switching request carries the attribute information.

S305: The to-be-switched network side device determines OAM mode set information based on the attribute information.

S306: The to-be-switched network side device sends the OAM mode set information to the network side device.

S307: The network side device sends the OAM mode set information to the communications apparatus.

S308: The communications apparatus accesses the to-be-switched network side device based on the OAM mode set information.

According to another aspect of the embodiments of this application, an embodiment of this application further provides a communications apparatus.

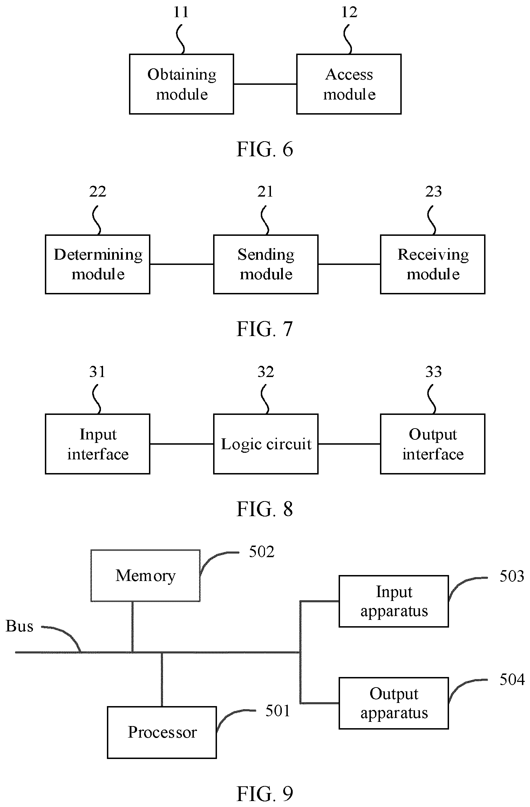

FIG. 6 is a schematic diagram of a communications apparatus according to an embodiment of this application.

As shown in FIG. 6, the communications apparatus includes:
an obtaining module 11, configured to obtain OAM mode set information sent by a network side device; and
an access module 12, configured to access the network side device based on the OAM mode set information.

In some embodiments, the OAM mode set information includes at least one OAM mode signal sent by the network side device.

In some embodiments, the OAM mode set information includes OAM mode signals sent by the network side device, and the OAM mode signals are simultaneously sent by the network side device.

In some embodiments, the OAM mode set information includes OAM mode signals that are sequentially sent by the network side device in a sending period.

In some embodiments, the OAM mode set information is determined by the network side device based on divergence performance corresponding to each OAM mode signal.

In some embodiments, the OAM mode set information includes any OAM mode signal sent by the network side device, and the any OAM mode signal is different in adjacent sending periods of the network side device.

In some embodiments, the access module 12 is configured to determine, from the OAM mode set information, an OAM mode signal for sending a preamble to the network side device.

In some embodiments, the access module 12 is configured to determine, based on receiving performance for receiving each OAM mode in the OAM mode set information, the OAM mode signal for sending the preamble.

In some embodiments, the receiving performance includes signal strength for receiving each OAM mode signal in the OAM mode set information.

In some embodiments, the OAM mode set information is determined and sent by a to-be-switched network side device based on attribute information that is of the communications apparatus and that is sent by the network side device.

According to another aspect of the embodiments of this application, an embodiment of this application further provides a network side device.

FIG. 7 is a schematic diagram of a network side device according to an embodiment of this application.

As shown in FIG. 7, the network side device includes:
a sending module 21, configured to send OAM mode set information to a communications apparatus.

In some embodiments, the OAM mode set information includes at least one OAM mode signal.

In some embodiments, the sending module 21 is configured to simultaneously send the OAM mode set information including OAM mode signals to the communications apparatus.

In some embodiments, the sending module 21 is configured to sequentially sends, to the communications apparatus in a sending period, the OAM mode set information including OAM mode signals.

With reference to FIG. 7, in some embodiments, the network side device further includes:
a determining module 22, configured to determine the OAM mode set information based on divergence performance corresponding to each OAM mode signal.

In some embodiments, the sending module 21 sends, to the communications apparatus, the OAM mode set information including any OAM mode signal, and the any OAM mode signal is different in adjacent sending periods of the network side device.

In some embodiments, the network side device further includes:
with reference to FIG. 7, a receiving module 23, configured to receive a preamble sent by the communications apparatus, where an OAM mode signal used by the communications apparatus for sending the preamble is determined by the communications apparatus from the OAM mode set information.

In some embodiments, an OAM mode signal for receiving the preamble is determined by the communications apparatus based on receiving performance of each OAM mode signal in the OAM mode set information.

In some embodiments, the receiving performance includes signal strength for receiving each OAM mode signal in the OAM mode set information.

In some embodiments, the receiving module 23 is configured to receive the OAM mode set information sent by a to-be-switched network side device, and the OAM mode set information is determined by the to-be-switched network side device based on attribute information that is of the communications apparatus and that is sent by the network side device.

According to another aspect of the embodiments of this application, an embodiment of this application further provides a network access system. The system includes the communications apparatus shown in FIG. 6 and the network side device shown in FIG. 7.

According to another aspect of the embodiments of this application, an embodiment of this application further provides a chip, and the communications apparatus may also be understood as a chip.

FIG. 8 is a schematic diagram of a chip according to an embodiment of this application.

As shown in FIG. 8, the chip includes:
an input interface 31, configured to obtain OAM mode set information sent by a network side device;
a logic circuit 32, configured to perform, based on the OAM mode set information, the method in any one of the foregoing embodiments, to obtain an OAM mode signal accessing the network side device; and
an output interface 33, configured to output a preamble to the network side device based on the obtained OAM mode signal.

According to another aspect of the embodiments of this application, an embodiment of this application further provides a computer program product. When the computer program product runs on a processor, the method corresponding to the communications apparatus is performed or the method corresponding to the network side device is performed.

According to another aspect of the embodiments of this application, an embodiment of this application further provides a computer storage medium, where the computer storage medium stores computer instructions, and when the computer instructions are run by a processor, the method corresponding to the communications apparatus is performed or the method corresponding to the network side device is performed.

According to another aspect of the embodiments of this application, an embodiment of this application further provides an electronic device.

FIG. 9 is a schematic diagram of an electronic device according to an embodiment of this application.

The electronic device is intended to represent various forms of digital computers, such as a laptop computer, a desktop computer, a workbench, a personal digital assistant, a server, a blade server, a mainframe computer, and another suitable computer. The electronic device may also represent various forms of mobile apparatuses, such as personal digital assistant, a cellular phone, a smartphone, a wearable device, and other similar computing apparatuses. Components shown in this specification, connections and relationships thereof, and functions thereof are merely examples, and are not intended to limit implementation of this application described and/or required in this specification.

As shown in FIG. 9, the electronic device includes one or more processors 501, a memory 502, and interfaces configured to connect components, including a high-speed interface and a low-speed interface. The memory 502 and the processor 501 may be connected through an interface, or may be integrated together. The components are connected to each other through different buses, and may be installed on a common mainboard or installed in another manner as required. The processor may process instructions executed in the electronic device, including instructions stored in the memory or on the memory to display graphic information of a GUI on an external input/output apparatus (for example, a display device coupled to an interface). In other implementations, a plurality of processors and/or a plurality of buses may be used together with a plurality of memories and a plurality of memories if necessary. Similarly, a plurality of electronic devices may be connected, and each device provides some necessary operations (for example, as a server array, a group of blade servers, or a multiprocessor system). In FIG. 9, one processor 501 is used as an example.

The memory 502 is the computer storage medium provided in this application. The memory stores instructions that can be executed by at least one processor, so that the network access method provided in this application is performed. The computer storage medium in this application stores computer instructions, so that the network access method provided in this application is performed.

As the computer storage medium, the memory 502 may be configured to store a non-transitory software program, a non-transitory computer-executable program, and a module. The processor 501 runs the non-transitory software program, instructions, and the module that are stored in the memory 502, to execute various functions and applications and process data.

The memory 502 may include a program storage area and a data storage area. The program storage area may store an operating system, an application program required by at least one function, and the like. The data storage area may store data created based on use of the electronic device, and the like. In addition, the memory 502 may include a high-speed random access memory, and may also include a non-transitory memory such as at least one disk storage device, a flash memory device, or another non-transitory solid-state storage device. In some embodiments, the memory 502 may optionally include memories that are remotely disposed relative to the processor 501, and the remote memories may be connected to the electronic device over a network. Examples of the foregoing network include but are not limited to the internet, an intranet, a local area network, a mobile communications network, and a combination thereof.

The electronic device may further include an input apparatus 503 and an output apparatus 504. The processor 501, the memory 502, the input apparatus 503, and the output apparatus 504 may be connected through a bus or in another manner. In FIG. 9, an example in which the processor 501, the memory 502, the input apparatus 503, and the output apparatus 504 are connected through a bus is used.

The input apparatus 503 may receive input digit or character information, and generate key signal input related to user setting and function control of the electronic device, for example, an input apparatus such as a touchscreen, a keypad, a mouse, a trackpad, a touchpad, an indicator rod, one or more mouse buttons, a trackball, or a joystick. The output apparatus 504 may include a display device, an auxiliary lighting apparatus (for example, an LED), a tactile feedback apparatus (for example, a vibration motor), and the like. The display device may include but is not limited to a liquid crystal display (LCD), a light emitting diode (LED) display, and a plasma display. In some implementations, the display device may be a touchscreen.

Various implementations of the system and technologies described herein may be implemented in a digital electronic circuit system, an integrated circuit system, an application-specific ASIC (application-specific integrated circuit), computer hardware, firmware, software, and/or combinations thereof. These various implementations may include being implemented in one or more computer programs. The one or more computer programs may be executed and/or interpreted in a programmable system including at least one programmable processor. The programmable processor may be a dedicated or general-purpose programmable processor, and may receive data and instructions from a storage system, at least one input apparatus, and at least one output apparatus and transmit the data and the instructions to the storage system, the at least one input apparatus, and the at least one output apparatus.

These computing programs (also referred to as programs, software, software applications, or code) include machine instructions of a programmable processor, and may be implemented by using a high-level process and/or an object-oriented programming language, and/or an assembly/machine language. As used in this specification, the terms "machine-readable medium" and "computer-readable medium" refer to any computer program product, device, and/or apparatus (for example, a magnetic disk, an optical disc, a memory, or a programmable logic apparatus (PLD)) configured to provide machine instructions and/or data to a programmable processor, and includes a machine-readable medium for receiving machine instructions as machine-readable signals. The term "machine-readable signal" refers to any signal used to provide machine instructions and/or data to a programmable processor.

To provide interaction with a user, the system and technologies described herein may be implemented on a computer, and the computer has a display apparatus (for example, a CRT (cathode ray tube) or an LCD (liquid crystal display) monitor) for displaying information to the user and a keyboard and a pointing apparatus (for example, a mouse or a trackball). The user may provide an input to the computer by using the keyboard and the pointing apparatus. Another type of apparatus may be further configured to provide interaction with the user. For example, a feedback provided for the user may be any form of sensor feedback (for example, a visual feedback, an auditory feedback, or a tactile feedback). In addition, an input from the user may be received in any form (including a sound input, a voice input, or a tactile input).

The system and technologies described herein may be implemented in a computing system including a back-end component (for example, being as a data server), a computing system including a middleware component (for example, an application server), a computing system including a front-end component (for example, a user computer having a graphical user interface or a web browser, where a user may interact with an implementation of the system and technologies described herein by using the graphical user interface or the web browser), or a computing system including any combination of the back-end component, the middleware component, or the front-end component. Components of the system may be interconnected through any form or medium digital data communication (for example, a communications network). Examples of the communications network include a local area network (LAN), a wide area network (WAN), and the internet.

The computer system can include clients and servers. The client and the server are generally far away from each other and usually interact over the communications network. A relationship between the client and the server is generated by running computer programs, having a client-server relationship with each other, on corresponding computers.

It should be understood that various forms of processes shown above can be used to reorder, add, or delete steps. For example, the steps described in this application may be performed in parallel, or may be performed in sequence, or may be performed in different sequences, provided that an expected result of the technical solutions in this application can be implemented. This is not limited herein.

The foregoing specific implementations do not constitute any limitation on the protection scope of this application. A person skilled in the art should understand that various modifications, combinations, sub-combinations, and substitutions may be made according to design requirements and other factors.

## Claims

1. A network access method, wherein the method comprises:
obtaining, by a communications apparatus (100), Orbital Angular Momentum, OAM, mode set information sent by a network side device (200); and
accessing (S102), by the communications apparatus, the network side device based on the OAM mode set information,
wherein the OAM mode set information comprises OAM mode signals sent by the network side device, and the OAM mode signals are sent simultaneously or sequentially by the network side device,
**characterized in that** the OAM mode set information is determined by the network side device based on divergence performance corresponding to each OAM mode signal.

2. The method according to claim 1, wherein the OAM mode set information comprises at least one OAM mode signal sent by the network side device (200).

3. The method according to claim 1, wherein the OAM mode set information comprises any OAM mode signal sent by the network side device (200), and the any OAM mode signal is different in adjacent sending periods of the network side device.

4. The method according to any one of claims 1 to 3, wherein the accessing, by the communications apparatus (100), the network side device (200) based on the OAM mode set information comprises:
determining (S202), by the communications apparatus from the OAM mode set information, an OAM mode signal for sending a preamble to the network side device.

5. The method according to claim 4, wherein the determining (S202), by the communications apparatus from the OAM mode set information, an OAM mode signal for sending a preamble to the network side device comprises:
determining, by the communications apparatus based on receiving performance for receiving each OAM mode in the OAM mode set information, the OAM mode signal for sending the preamble.

6. The method according to claim 5, wherein the receiving performance comprises signal strength for receiving each OAM mode signal in the OAM mode set information.

7. The method according to any one of claims 1 to 3, wherein the OAM mode set information is determined and sent by a to-be-switched network side device (200) based on attribute information that is of the communications apparatus and that is sent by the network side device.

8. A network access method, wherein the method comprises:
sending (S101), by a network side device (200), OAM mode set information to a communications apparatus (100),
wherein the network side device simultaneously or sequentially sends the OAM mode set information comprising OAM mode signals to the communications apparatus,
**characterized in that** the network side device determines the OAM mode set information based on divergence performance corresponding to each OAM mode signal.

9. The method according to claim 8, wherein the OAM mode set information comprises at least one OAM mode signal.

10. The method according to claim 8, wherein the network side device (200) sends, to the communications apparatus (100), the OAM mode set information comprising any OAM mode signal, and the any OAM mode signal is different in adjacent sending periods of the network side device.

11. The method according to any one of claims 8 to 10, wherein the network side device receives a preamble sent by the communications apparatus, and an OAM mode signal used by the communications apparatus for sending the preamble is determined by the communications apparatus from the OAM mode set information.

12. The method according to claim 11, wherein an OAM mode signal used by the network side device (200) for receiving the preamble is determined by the communications apparatus based on receiving performance of each OAM mode signal in the OAM mode set information.

13. An electronic device, comprising:
at least one processor (501); and
a memory (502) in communication connection with the at least one processor,
**characterized in that**
the memory stores instructions that can be executed by the at least one processor, and the instructions are executed by the at least one processor, so that the method according to any preceding claim is performed.

14. A chip, comprising:
an input interface, configured to obtain OAM mode set information sent by a network side device;
a logic circuit, configured to perform, based on the OAM mode set information, the method according to any one of claims 1 to 7, to obtain an OAM mode signal accessing the network side device; and
an output interface, configured to output a preamble to the network side device based on the obtained OAM mode signal.

## Patentansprüche

1. Netzwerkzugriffsverfahren, wobei das Verfahren Folgendes umfasst:
Erlangen, durch eine Kommunikationseinrichtung (100), von Bahndrehimpuls-, OAM-, Modus-Einstellungsinformationen, die von einer netzwerkseitigen Vorrichtung (200) gesendet werden; und
Zugreifen (S102), durch die Kommunikationseinrichtung, auf die netzwerkseitige Vorrichtung, basierend auf den OAM-Modus-Einstellungsinformationen,
wobei die OAM-Modus-Einstellungsinformationen OAM-Modus-Signale umfassen, die von der netzwerkseitigen Vorrichtung gesendet werden, und die OAM-Modus-Signale von der netzwerkseitigen Vorrichtung gleichzeitig oder nacheinander gesendet werden,
**dadurch gekennzeichnet, dass** die OAM-Modus-Einstellungsinformationen von der netzwerkseitigen Vorrichtung auf der Grundlage von Divergenzleistung, die jedem OAM-Modus-Signal entspricht, bestimmt werden.

2. Verfahren nach Anspruch 1, wobei die OAM-Modus-Einstellungsinformationen mindestens ein von der netzwerkseitigen Vorrichtung (200) gesendetes OAM-Modus-Signal umfassen.

3. Verfahren nach Anspruch 1, wobei die OAM-Modus-Einstellungsinformationen ein beliebiges OAM-Modus-Signal umfassen, das von der netzwerkseitigen Vorrichtung (200) gesendet wird, und sich das beliebige OAM-Modus-Signal in benachbarten Sendeperioden der netzwerkseitigen Vorrichtung unterscheidet.

4. Verfahren nach einem der Ansprüche 1 bis 3, wobei das Zugreifen der Kommunikationseinrichtung (100) auf die netzwerkseitige Vorrichtung (200) auf der Grundlage der OAM-Modus-Einstellungsinformationen Folgendes umfasst:
Bestimmen (S202), durch die Kommunikationseinrichtung aus den OAM-Modus-Einstellungsinformationen, eines OAM-Modus-Signals zum Senden einer Präambel an die netzwerkseitige Vorrichtung.

5. Verfahren nach Anspruch 4, wobei das Bestimmen (S202), durch die Kommunikationseinrichtung aus den OAM-Modus-Einstellungsinformationen, eines OAM-Modus-Signals zum Senden einer Präambel an die netzwerkseitige Vorrichtung Folgendes umfasst:
Bestimmen, durch die Kommunikationseinrichtung auf Grundlage der Empfangsleistung für das Empfangen jedes OAM-Modus in den OAM-Modus-Einstellungsinformationen, des OAM-Modus-Signals zum Senden der Präambel.

6. Verfahren nach Anspruch 5, wobei die Empfangsleistung die Signalstärke für das Empfangen jedes OAM-Modus-Signals in den OAM-Modus-Einstellungsinformationen umfasst.

7. Verfahren nach einem der Ansprüche 1 bis 3, wobei die OAM-Modus-Einstellungsinformationen von einer zu schaltenden netzwerkseitigen Vorrichtung (200) auf der Grundlage von Attributinformationen der Kommunikationseinrichtung, die von der netzwerkseitigen Vorrichtung gesendet werden, bestimmt und gesendet werden.

8. Netzwerkzugriffsverfahren, wobei das Verfahren Folgendes umfasst:
Senden (S101), durch eine netzwerkseitige Vorrichtung (200), von OAM-Modus-Einstellungsinformationen an eine Kommunikationseinrichtung (100),
wobei die netzwerkseitige Vorrichtung gleichzeitig oder nacheinander die OAM-Modus-Einstellungsinformationen, umfassend die OAM-Modus-Signale, an die Kommunikationseinrichtung sendet, **dadurch gekennzeichnet, dass** die netzwerkseitige Vorrichtung die OAM-Modus-Einstellungsinformationen auf der Grundlage von Divergenzleistung, die jedem OAM-Modus-Signal entspricht, bestimmt.

9. Verfahren nach Anspruch 8, wobei die OAM-Modus-Einstellungsinformationen mindestens ein OAM-Modus-Signal umfassen.

10. Verfahren nach Anspruch 8, wobei die netzwerkseitige Vorrichtung (200) die OAM-Modus-Einstellungsinformationen, die ein beliebiges OAM-Modus-Signal umfassen, an die Kommunikationseinrichtung (100) sendet, und sich das beliebige OAM-Modus-Signal in benachbarten Sendeperioden der netzwerkseitigen Vorrichtung unterscheidet.

11. Verfahren nach einem der Ansprüche 8 bis 10, wobei die netzwerkseitige Vorrichtung eine von der Kommunikationseinrichtung gesendete Präambel empfängt und das von der Kommunikationseinrichtung zum Senden der Präambel verwendete OAM-Modus-Signal von der Kommunikationseinrichtung aus den OAM-Modus-Einstellungsinformationen bestimmt wird.

12. Verfahren nach Anspruch 11, wobei das von der netzwerkseitigen Vorrichtung (200) zum Empfangen der Präambel verwendete OAM-Modus-Signal von der Kommunikationseinrichtung auf der Grundlage der Empfangsleistung jedes OAM-Modus-Signals in den OAM-Modus-Einstellungsinformationen bestimmt wird.

13. Elektronische Vorrichtung, umfassend:
mindestens einen Prozessor (501); und
einen Speicher (502), der mit dem mindestens einem Prozessor in Kommunikationsverbindung steht,
**dadurch gekennzeichnet, dass**
der Speicher Anweisungen speichert, die von dem mindestens einen Prozessor ausgeführt werden können, und die Anweisungen von dem mindestens einen Prozessor ausgeführt werden, sodass das Verfahren nach einem der vorhergehenden Ansprüche ausgeführt wird.

14. Chip, umfassend:
eine Eingabeschnittstelle, die dazu konfiguriert ist, OAM-Modus-Einstellungsinformationen zu erlangen, die von einer netzwerkseitigen Vorrichtung gesendet werden;
eine Logikschaltung, die dazu konfiguriert ist, basierend auf den OAM-Modus-Einstellungsinformationen das Verfahren nach einem der Ansprüche 1 bis 7 durchzuführen, um ein OAM-Modus-Signal zu erlangen, das auf die netzwerkseitige Vorrichtung zugreift; und
eine Ausgabeschnittstelle, die dazu konfiguriert ist, basierend auf dem erlangten OAM-Modus-Signal eine Präambel an die netzwerkseitige Vorrichtung auszugeben.

## Revendications

1. Procédé d'accès à un réseau, dans lequel le procédé comprend :
l'obtention, par un appareil de communication (100), d'informations d'ensemble de mode de moment angulaire orbital, OAM, envoyées par un dispositif côté réseau (200) ; et
l'accès (S102), par l'appareil de communication, au dispositif côté réseau sur la base des informations d'ensemble de mode OAM, dans lequel les informations d'ensemble de mode OAM comprennent des signaux de mode OAM envoyés par le dispositif côté réseau, et les signaux de mode OAM sont envoyés simultanément ou séquentiellement par le dispositif côté réseau,
**caractérisé en ce que** les informations d'ensemble de mode OAM sont déterminées par le dispositif côté réseau sur la base des performances de divergence correspondant à chaque signal de mode OAM.

2. Procédé selon la revendication 1, dans lequel les informations d'ensemble de mode OAM comprennent au moins un signal de mode OAM envoyé par le dispositif côté réseau (200).

3. Procédé selon la revendication 1, dans lequel les informations d'ensemble de mode OAM comprennent un quelconque signal de mode OAM envoyé par le dispositif côté réseau (200), et le quelconque signal de mode OAM est différent dans les périodes d'envoi adjacentes du dispositif côté réseau.

4. Procédé selon l'une quelconque des revendications 1 à 3, dans lequel l'accès, par l'appareil de communication (100), au dispositif côté réseau (200) sur la base des informations d'ensemble de mode OAM comprend :
la détermination (S202), par l'appareil de communication à partir des informations d'ensemble de mode OAM, d'un signal de mode OAM pour envoyer un préambule au dispositif côté réseau.

5. Procédé selon la revendication 4, dans lequel la détermination (S202), par l'appareil de communication à partir des informations d'ensemble de mode OAM, d'un signal de mode OAM pour envoyer un préambule au dispositif côté réseau comprend :
la détermination, par l'appareil de communication sur la base de performance de réception pour la réception de chaque mode OAM dans les informations d'ensemble de mode OAM, du signal de mode OAM pour envoyer le préambule.

6. Procédé selon la revendication 5, dans lequel la performance de réception comprend la force de signal pour la réception de chaque signal de mode OAM dans les informations d'ensemble de mode OAM.

7. Procédé selon l'une quelconque des revendications 1 à 3, dans lequel les informations d'ensemble de mode OAM sont déterminées et envoyées par un dispositif côté réseau à commuter (200) sur la base d'informations d'attributs qui sont de l'appareil de communication et qui sont envoyées par le dispositif côté réseau.

8. Procédé d'accès à un réseau, dans lequel le procédé comprend :
l'envoi (S101), par un dispositif côté réseau (200), d'informations d'ensemble de mode OAM à un appareil de communication (100),
dans lequel le dispositif côté réseau envoie simultanément ou séquentiellement les informations d'ensemble de mode OAM comprenant des signaux de mode OAM à l'appareil de communication,
**caractérisé en ce que** le dispositif côté réseau détermine les informations d'ensemble de mode OAM sur la base des performances de divergence correspondant à chaque signal de mode OAM.

9. Procédé selon la revendication 8, dans lequel les informations d'ensemble de mode OAM comprennent au moins un signal de mode OAM.

10. Procédé selon la revendication 8, dans lequel le dispositif côté réseau (200) envoie, à l'appareil de communication (100), les informations d'ensemble de mode OAM comprenant un quelconque signal de mode OAM, et le quelconque signal de mode OAM est différent dans les périodes d'envoi adjacentes du dispositif côté réseau.

11. Procédé selon l'une quelconque des revendications 8 à 10, dans lequel le dispositif côté réseau reçoit un préambule envoyé par l'appareil de communication, et un signal de mode OAM utilisé par l'appareil de communication pour envoyer le préambule est déterminé par l'appareil de communication à partir des informations d'ensemble de mode OAM.

12. Procédé selon la revendication 11, dans lequel un signal de mode OAM utilisé par le dispositif côté réseau (200) pour recevoir le préambule est déterminé par l'appareil de communication sur la base de la performance de réception de chaque signal de mode OAM dans les informations d'ensemble de mode OAM.

13. Dispositif électronique, comprenant :
au moins un processeur (501) ; et
une mémoire (502) en connexion de communication avec l'au moins un processeur,
**caractérisé en ce que**
la mémoire stocke des instructions qui peuvent être exécutées par l'au moins un processeur, et les instructions sont exécutées par l'au moins un processeur, de sorte que le procédé selon l'une quelconque de la revendication précédente est réalisé.

14. Puce, comprenant :
une interface d'entrée, configurée pour obtenir des informations d'ensemble de mode OAM envoyées par un dispositif côté réseau ; un circuit logique, configuré pour réaliser, sur la base des informations d'ensemble de mode OAM, le procédé selon l'une quelconque des revendications 1 à 7, pour obtenir un signal de mode OAM accédant au dispositif côté réseau ; et
une interface de sortie, configurée pour délivrer en sortie un préambule vers le dispositif côté réseau sur la base du signal de mode OAM obtenu.
